# EUROPEAN PATENT APPLICATION

(11) **EP 2 942 990 A1**
(43) Date of publication of application: **11.11.2015**
(21) Application number: 13870027.3
(22) Date of filing: 09.10.2013
(51) Int. Cl.: H04W 4/08

(54) **METHOD, SYSTEM AND EQUIPMENT FOR REALIZING CLUSTER GROUP CALL SESSION IN LONG TERM EVOLUTION**

(30) Priority: 07.01.2013 CN 201310005182
(71) Applicant: ZTE Corporation, Shenzhen, Guangdong 518057 (CN)
(72) Inventor: XU, Weijiang, Shenzhen Guangdong 518057 (CN); WAN, Qiang, Shenzhen Guangdong 518057 (CN)
(74) Representative: Tischner, Oliver
(86) International application number: PCT/CN2013/084928
(87) International publication number: WO 2014/106401

(57) **Abstract**

A method for realizing a cluster group call session in a Long Term Evolution (LTE) system is described. The method comprises that: an Evolved Packet Core (EPC) establishes uplink and downlink radio bearers of the cluster group call session between a calling User Equipment (UE) and the EPC through a first evolved Node B (eNB) where the calling UE is located; and the EPC establishes a downlink radio bearer of the cluster group call session between a called UE and the EPC through a second eNB where the called UE is located. Simultaneously, a system and an apparatus for realizing a cluster group call session in an LTE system are described. With the method, system and apparatus for realizing a cluster group call session in the LTE system provided in the disclosure, cluster group call session services can be realized in an LTE network, and unified commanding, scheduling and management of a calling user on called users can be realized.

## Description

### TECHNICAL FIELD

The disclosure relates to the cluster communication technology, and in particular to a method, a system and an apparatus for realizing a cluster group call session in a Long Term Evolution (LTE) system.

### BACKGROUND

A cluster communication system is a mobile scheduling system, which represents the development trend of a private mobile communication network (which is one of communication systems). Cluster services provided by the cluster communication system have technical features such as channel share and dynamic allocation. The cluster communication system can provide communication services such as private commanding and scheduling for a group user consisting of multiple departments or units. At the end of the twentieth century, as the popularity of digital communication systems, cluster communication systems based on the digital communication technology had been widely applied. In recent years, the third-generation even the fourth-generation radio communication technology has been rapidly developed, which also put forwards various requirements such broadband, high-speed and smooth evolution on the digital cluster communication systems.

A group call session is one of the main services of the cluster communication system, of which the characteristic is that multiple users can enter one same session connection, one user has a speaking right and belongs to a speaking-right user while the other users have no speaking right and belong to non-speaking-right users. Specifically, the speaking-right user transmits group call service data (which might including voice, file, image and other types) to a network from a terminal and the network broadcasts the group call service data to other non-speaking-right users, thereby realizing the unified commanding, scheduling and management of cluster services.

The speaking-right user and the non-speaking-right users need to execute some processes to access one same session connection. This process runs through a terminal, a radio network and a core network. In the second-generation mobile communication technology and the third-generation mobile communication technology era, Code Division Multiple Access (CDMA) technology and Global System of Mobile communication (GSM) technology have matured, cluster services are reasonably expanded on the basis of CDMA standards and GSM standards based access flows, and relatively mature cluster communication systems and group call session services based on CDMA standards and GSM standards are realized. However, the group call session service based on LTE technology has not been realized by far; therefore, it is necessary to propose a group call session solution in an LTE system.

### SUMMARY

In view of this, the embodiment of the disclosure is intended to provide a method, a system and an apparatus for realizing a cluster group call session in an LTE system, which can realize cluster group call session services in the LTE technology.

To this end, the technical solutions of the embodiment of the disclosure are implemented as follows.

An embodiment of the disclosure provides a method for realizing a cluster group call session in an LTE system, which includes:
establishing, by an Evolved Packet Core (EPC), uplink and downlink radio bearers of the cluster group call session between a calling User Equipment (UE) and the EPC through a first evolved Node B (eNB) where the calling UE is located; and
establishing, by the EPC, a downlink radio bearer of the cluster group call session between a called UE and the EPC through a second eNB where the called UE is located.

Preferably, the establishing, by an EPC, uplink and downlink radio bearers of the cluster group call session between a calling UE and the EPC through a first eNB where the calling UE is located may include:
establishing a Radio Resource Control (RRC) connection of the cluster group call session between the calling UE and the first eNB where the calling UE is located;
establishing an initial UE context of the cluster group call session between the EPC and the first eNB where the calling UE is located.

Preferably, the establishing an initial UE context of the cluster group call session between the EPC and the first eNB where the calling UE is located may include:
receiving, by the EPC, an initial UE message of the cluster group call session sent by the first eNB; and sending, by the EPC, an initial UE context establishment request message of the cluster group call session to the first eNB according to the initial UE message of the cluster group call session;
after receiving the initial UE context establishment request message of the cluster group call session, establishing, by the first eNB, a safe mode of the cluster group call session between the first eNB and the calling UE and an RRC reconfiguration of the cluster group call session in the safe mode; and then returning, by the first eNB, an initial UE context establishment response message of the cluster group call session to the EPC.

Preferably, the establishing, by the EPC, a downlink radio bearer of the cluster group call session between a called UE and the EPC through a second eNB where the called UE is located may include:
establishing a group context of the cluster group call session between the EPC and the second eNB where the called UE is located;
establishing a downlink broadcast channel between the second eNB and the called UE.

Preferably, the method may further include: before establishing a group context of the cluster group call session between the EPC and the second eNB where the called UE is located,
sending, by the EPC, a group paging message of the cluster group call session to the second eNB where the called UE is located, according to the initial UE message of the cluster group call session;
after receiving the group paging message of the cluster group call session, sending, by the second eNB, the group paging message of the cluster group call session to the called UE under coverage of the second eNB; and then receiving and forwarding, by the second eNB, a group paging response message of the cluster group call session returned by the called UE to the EPC.

Preferably, the establishing a group context of the cluster group call session between the EPC and the second eNB where the called UE is located may include:
sending, by the EPC, a group context establishment request message of the cluster group call session to the second eNB;
establishing, by the second eNB, a group downlink broadcast channel of the cluster group call session according to the group context establishment request message; sending, by the second eNB, a configuration message of the group downlink broadcast channel of the cluster group call session to the called UE;
sending, by the second eNB, a group context establishment response message of the cluster group call session to the EPC.

An embodiment of the disclosure also provides an EPC, wherein the EPC is configured to establish uplink and downlink radio bearers of a cluster group call session between a calling UE and the EPC through a first eNB, and to establish a downlink radio bearer of the cluster group call session between a called UE and the EPC through a second eNB.

Preferably, the EPC may be configured to establish an initial UE context of the cluster group call session between the EPC and the first eNB.

Preferably, the EPC may be further configured to receive an initial UE message of the cluster group call session sent by the first eNB, and to send an initial UE context establishment request message of the cluster group call session to the first eNB according to the initial UE message of the cluster group call session.

Preferably, the EPC may be further configured to establish a group context of the cluster group call session between the EPC and the second eNB.

Preferably, the EPC may be further configured to send a group paging message of the cluster group call session to the second eNB according to the initial UE message of the cluster group call session sent by the first eNB.

Preferably, the EPC may be further configured to send a group context establishment request message of the cluster group call session to the second eNB.

An embodiment of the disclosure also provides an eNB, which is an eNB where a called UE is located and is configured to establish a downlink radio bearer of a cluster group call session between a called UE and an Evolved Packet Core (EPC).

Preferably, the eNB may be configured to establish a downlink broadcast channel between the eNB and the called UE.

Preferably, the eNB may be further configured to send a group paging message of the cluster group call session to the called UE under coverage of the eNB after receiving the group paging message of the cluster group call session sent by the EPC, and to return a group paging response message of the cluster group call session to the EPC after receiving the group paging response message of the cluster group call session returned by the called UE.

Preferably, the eNB may be further configured to establish a group downlink broadcast channel of the cluster group call session according to a group context establishment request message sent by the EPC, to send a configuration message of the group downlink broadcast channel of the cluster group call session to the called UE, and to send a group context establishment response message of the cluster group call session to the EPC.

An embodiment of the disclosure also provides a system for realizing a cluster group call session in an LTE system, which includes: an EPC, a first eNB and a second eNB, wherein the first eNB is an eNB where a calling UE is located, and the second eNB is an eNB where a called UE is located, wherein,
the EPC is one described above, and the second eNB is one described above.

Preferably, the first eNB may be configured to send an initial UE message of the cluster group call session to the EPC, to establish a safe mode of the cluster group call session between the first eNB and the calling UE and an RRC reconfiguration of the cluster group call session in the safe mode after receiving the initial UE context establishment request message of the cluster group call session, and to return an initial UE context establishment response message of the cluster group call session to the EPC.

Preferably, the system may further include: a calling UE and a called UE, wherein
the calling UE is configured to establish a Radio Resource Control (RRC) connection of the cluster group call session between the calling UE and the first eNB;
the called UE is configured to return a group paging response message of the cluster group call session to the second eNB after receiving the group paging message of the cluster group call session.

With the method, system and apparatus for realizing a cluster group call session in an LTE system provided in the embodiment of the disclosure, an EPC establishes uplink and downlink radio bearers of the cluster group call session between a calling UE and the EPC through a first eNB where the calling UE is located; and the EPC establishes a downlink radio bearer of the cluster group call session between a called UE and the EPC through a second eNB where the called UE is located. Thus, cluster group call sessions are realized between the calling UE and the called UE; in this way, cluster group call session services are realized in the LTE system, and unified commanding, scheduling and management of a calling user on called users are realized.

### BRIEF DESCRIPTION OF THE DRAWINGS

Fig. 1 is a flowchart of a method for realizing a cluster group call session in an LTE system according to an embodiment of the disclosure; and
Fig. 2 is a flowchart of a method for realizing a cluster group call session in an LTE system according to another embodiment of the disclosure.

### DETAILED DESCRIPTION

The disclosure is described below in further detail in conjunction with the drawings and specific embodiments.

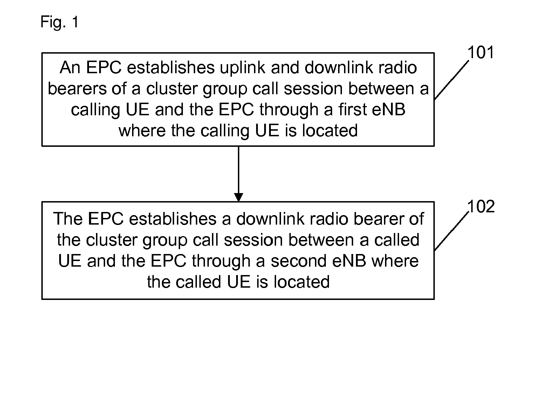

Fig. 1 is a flowchart of a method for realizing a cluster group call session in an LTE system according to an embodiment of the disclosure; as shown in Fig. 1, the method includes the following steps:
Step 101: an EPC establishes uplink and downlink radio bearers of a cluster group call session between a calling UE and the EPC through a first eNB where the calling UE is located.

Here, the step that an EPC establishes uplink and downlink radio bearers of a cluster group call session between a calling UE and the EPC through a first eNB where the calling UE is located includes:
establishing an RRC connection of the cluster group call session between the calling UE and the first eNB where the calling UE is located;
establishing an initial UE context of the cluster group call session between the EPC and the first eNB where the calling UE is located.

Specifically, the step of establishing an RRC connection of the cluster group call session between the calling UE and the first eNB where the calling UE is located includes:
the calling UE sends an RRC connection establishment request message of the cluster group call session to the first eNB, and sends an RRC connection establishment complete message of the cluster group call session to the eNB after receiving an RRC connection establishment message of the cluster group call session returned by the first eNB;
here, the RRC connection establishment request message of the cluster group call session is a message that includes a cluster group call session Identification (ID) to differentiate from other LTE data services, and includes cluster related parameters, for example, cluster ID number information and the like

Here, through the RRC connection of the cluster group call session, an air interface signalling bearer of the cluster group call session is established between the calling UE and the first eNB, wherein the signal bearer may be a Signalling Radio Bearerl (SRB1).

Preferably, the step of establishing an initial UE context of the cluster group call session between the EPC and the first eNB where the calling UE is located includes:
the EPC receives an initial UE message of the cluster group call session sent by the first eNB, and sends an initial UE context establishment request message of the cluster group call session to the first eNB according to the initial UE message of the cluster group call session;
after receiving the initial UE context establishment request message of the cluster group call session, the first eNB establishes a safe mode of the cluster group call session between the first eNB and the calling UE and an RRC reconfiguration of the cluster group call session in the safe mode, and then returns an initial UE context establishment response message of the cluster group call session to the EPC.
here, the initial UE context establishment request message of the cluster group call session is a message that includes a cluster group call session ID for differentiating from other LTE data services, and includes cluster related parameters, for example, cluster ID number information and the like.

In this embodiment, the safe mode of the cluster group call session between the first eNB and the calling UE is established by using an encryption algorithm; after the safe mode of the cluster group call session is established, the RRC reconfiguration of the cluster group call session between the first eNB and the calling UE is established, the air interface signalling bearer and the Data Radio Bearer (DRB) of the cluster group call session between the first eNB and the calling UE are established, wherein the signalling bearer may be an SRB2.

Preferably, if the initial UE context establishment request message of the cluster group call session includes UE capability information, the method further includes:
the first eNB sends a UE capability query message of the cluster group call session to the calling UE, receives the returned UE capability information of the cluster group call session, and sends the UE capability information of the cluster group call session to the EPC.

Step 102: the EPC establishes a downlink radio bearer of the cluster group call session between a called UE and the EPC through a second eNB where the called UE is located.

Here, the step that the EPC establishes a downlink radio bearer of the cluster group call session between a called UE and the EPC through a second eNB where the called UE is located includes:
establishing a group context of the cluster group call session between the EPC and the second eNB where the called UE is located;
establishing a downlink broadcast channel between the second eNB and the called UE.

Preferably, before establishing a group context of the cluster group call session between the EPC and the second eNB where the called UE is located, the method further includes:
the EPC sends a group paging message of the cluster group call session to the second eNB where the called UE is located, according to an initial UE message of the cluster group call session;
after receiving the group paging message of the cluster group call session, the second eNB sends the group paging message of the cluster group call session to the called UE under the coverage of the second eNB, and then receives and forwards a group paging response message of the cluster group call session returned by the called UE to the EPC.

Here, considering that there might be a delay while the second eNB receives the group paging response message of the cluster group call session returned by the called UE, the second eNB can cyclically send the group paging message of the cluster group call session to the called UE by a fixed period.

Preferably, the step of establishing a group context of the cluster group call session between the EPC and the second eNB where the called UE is located includes:
the EPC sends a group context establishment request message of the cluster group call session to the second eNB;
the second eNB establishes a downlink broadcast channel of the cluster group call session according to the group context establishment request message, and sends a configuration message of the downlink broadcast channel of the cluster group call session to the called UE;
the second eNB sends a group context establishment response message of the cluster group call session to the EPC.

Here, since the called UE has no uplink data to send, the second eNB only needs to establish the downlink broadcast channel of the cluster group call session, so as to send service data to the called UE in a broadcast mode.

Specifically, the calling UE initiates a call, and establishes an RRC connection of the cluster group call session between the calling UE and the first eNB; the first eNB sends the initial UE message of the cluster group call session to the EPC according to the RRC connection request message sent by the calling UE; then, the EPC sends the initial context establishment request message of the cluster group call session to the first eNB according to the received initial UE message of the cluster group call session.

After the first eNB sends the initial context establishment request message of the cluster group call session, the EPC starts to establish the downlink radio bearer of the group call session between the called UE and the EPC through the second eNB, sends the group paging message of the cluster group call session to the second eNB, and receives the returned group paging response message of the cluster group call session; and the EPC sends the group context establishment request message of the cluster group call session to the second eNB; then, the second eNB establishes the group downlink broadcast channel of the cluster group call session and sends the configuration message of the group downlink broadcast channel of the cluster group call session to the called UE; at the same time, the EPC acquires the UE capability information of the cluster group call session, establishes the safe mode of the cluster group call session between the calling UE and the first eNB and the RRC reconfiguration of the cluster group call session; thus, the uplink and downlink radio bearers of the cluster group call session between the calling UE and the EPC and the downlink radio bearer between the called UE and the EPC are established.

When the EPC receives the initial UE context establishment response message of the cluster group call session sent by the first eNB and the group context establishment response message of the cluster group call session sent by the second eNB, the application layer part of the cluster group call session has been established.

Preferably, after the cluster group call session bearer is established, the method further includes the process of high-layer services, wherein the process specifically includes: establishing bearer activation and authorization between the calling UE and the EPC; after the EPC receives the UE uplink Non-Access Stratum (NAS) information of the cluster group call session used for authorization response forwarded by the first eNB, the EPC sends the UE downlink NAS information of the cluster group call session used for ringing to the first eNB and sends the group downlink NAS information of the cluster group call session used for ringing to the second eNB respectively; then, the first eNB forwards the UE downlink NAS information of the cluster group call session used for ringing to the calling UE and the second eNB forwards the group downlink NAS information of the cluster group call session used for ringing to the called UE; by far, all processes of the cluster group call session are completed.

In order to implement the above method, an embodiment of the disclosure also provides a system for realizing a cluster group call session in an LTE system, wherein the system includes: an EPC, a first eNB and a second eNB, wherein the first eNB is an eNB where a calling UE is located, and the second eNB is an eNB where a called UE is located, wherein,
the EPC is configured to establish uplink and downlink radio bearers of the cluster group call session between a calling UE and the EPC through a first eNB, and to establish a downlink radio bearer of the cluster group call session between a called UE and the EPC through a second eNB.

Preferably, the system further includes a calling UE, which is configured to establish an RRC connection of the cluster group call session between the calling UE and the first eNB.

Correspondingly, the EPC is configured to establish an initial UE context of the cluster group call session between the EPC and the first eNB.

Preferably, the EPC is further configured to receive an initial UE message of the cluster group call session sent by the first eNB, and to send an initial UE context establishment request message of the cluster group call session to the first eNB according to the initial UE message of the cluster group call session.

The first eNB is configured to send an initial UE message of the cluster group call session to the EPC, to establish a safe mode of the cluster group call session between the first eNB and the calling UE and an RRC reconfiguration of the cluster group call session in the safe mode after receiving the initial UE context establishment request message of the cluster group call session, and to return an initial UE context establishment response message of the cluster group call session to the EPC.

Preferably, the EPC is configured to establish a group context of the cluster group call session between the EPC and the second eNB.

The second eNB is configured to establish a downlink broadcast channel between the called UE and the eNB.

Preferably, the system further includes a called UE, which is configured to return a group paging response message of the cluster group call session to the second eNB after receiving a group paging message of the cluster group call session.

The EPC is further configured to send the group paging message of the cluster group call session to the second eNB according to the initial UE message of the cluster group call session sent by the first eNB.

The second eNB is also configured to send the group paging message of the cluster group call session to the called UE under the coverage of the second eNB after receiving the group paging message of the cluster group call session, and to return the group paging response message of the cluster group call session to the EPC after receiving the group paging response message of the cluster group call session returned by the called UE.

Preferably, the EPC is also configured to send a group context establishment request message of the cluster group call session to the second eNB.

The second eNB is further configured to establish a downlink broadcast channel of the cluster group call session according to the group context establishment request message, to send a configuration message of the downlink broadcast channel of the cluster group call session to the called UE, and to send a group context establishment response message of the cluster group call session to the EPC.

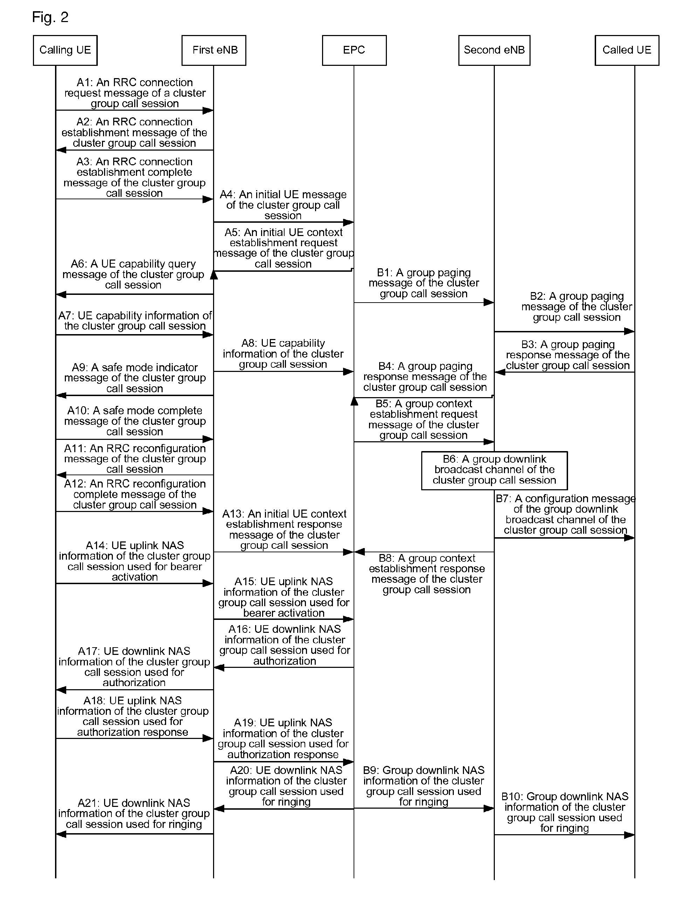

Fig. 2 is a flowchart of a method for realizing a cluster group call session in an LTE system according to another embodiment of the disclosure. As shown in Fig. 2, step A1 to step A13 is the application layer process of a calling UE accessing an EPC; step B1 to step B8 is the application layer process of a called UE accessing the EPC; step A14 to step A21 and step B9 to step B10 are the high-layer service processes after the cluster group call session bearer is established; specifically, the method includes following steps:
Step A1 to step A3: a calling UE sends an RRC connection request message of the cluster group call session to a first eNB, receives an RRC connection establishment message of the cluster group call session returned by the first eNB, and sends an RRC connection establishment complete message of the cluster group call session to the first eNB.

Here, through step A1 to step A3, an air interface SRB1 bearer of the cluster group call session is established between the calling UE and the first eNB; besides, the RRC connection request message of the cluster group call session includes a cluster group call session ID message and cluster related parameters that are used to differentiate from other LTE data services.

Step A4 to step A5: the first eNB sends an initial UE message of the cluster group call session to the EPC; the EPC sends an initial UE context establishment request message of the cluster group call session to the first eNB according to the initial UE message of the cluster group call session.

Step A6 to step A8: the first eNB sends a UE capability query message of the cluster group call session to the calling UE, receives UE capability information of the cluster group call session returned by the calling UE, and sends the UE capability information of the cluster group call session to the EPC.

Here, if the initial UE context establishment request message of the cluster group call session includes UE capability information, the first eNB needs to send a UE capability query message of the cluster group call session to the calling UE, and to send the UE capability information of the cluster group call session to the EPC after receiving the UE capability information of the cluster group call session returned by the calling UE.

Step A9 to step A10: the first eNB sends a safe mode indicator message of the cluster group call session to the calling UE, and receives a safe mode complete message of the cluster group call session returned by the calling UE.

Step A11 to step A12: the first eNB sends an RRC reconfiguration message of the cluster group call session to the calling UE, and receives an RRC reconfiguration complete message of the cluster group call session returned by the calling UE.

Here, through step A9 to step A12, an air interface SRB2 bearer and a DRB of the cluster group call session are established between the calling UE and the first eNB.

Step A13: the first eNB sends an initial UE context establishment response message of the cluster group call session to the EPC.

Through step A1 to step A13, the application layer process of the calling UE accessing the EPC is completed.

Step B1 to step B4: the EPC sends a group paging message of the cluster group call session to the second eNB; the second eNB forwards the group paging message of the cluster group call session to the called UE, receives a group paging response message of the cluster group call session sent by the called UE and forwards the group paging response message of the cluster group call session to the EPC.

Step B5 to step B8: the EPC sends a group context establishment request message of the cluster group call session to the second eNB; the second eNB establishes a group downlink broadcast channel of the cluster group call session, sends a configuration message of the group downlink broadcast channel of the cluster group call session to the called UE, and returns a group context establishment response message of the cluster group call session to the EPC.

Through step B1 to step B8, the application layer process of the called UE accessing the EPC is completed.

Step A14 to step A15: the calling UE sends UE uplink Non-Access Stratum (NAS) information of the cluster group call session used for bearer activation to the first eNB; the first eNB forwards the UE uplink NAS information of the cluster group call session used for bearer activation to the EPC.

Step A16 to step A17: the EPC sends UE downlink NAS information of the cluster group call session used for authorization to the first eNB; the first eNB forwards the UE downlink NAS information of the cluster group call session used for authorization to the calling UE.

Step A18 to step A19: the calling UE sends UE uplink NAS information of the cluster group call session used for authorization response to the first eNB; the first eNB forwards the UE uplink NAS information of the cluster group call session used for authorization response to the EPC.

Step A20 to step A21: the EPC sends UE downlink NAS information of the cluster group call session used for ringing to the first eNB; the first eNB forwards the UE downlink NAS information of the cluster group call session used for ringing to the calling UE.

While the EPC sends the UE downlink NAS information of the cluster group call session used for ringing to the first eNB, step B9 to step B10 are executed: the EPC sends group downlink NAS information of the cluster group call session used for ringing to the second eNB, and the second eNB forwards the group downlink NAS information of the cluster group call session used for ringing to the called UE.

Step A14 to step A21, step B9 to step B10 are the high-layer service processes after the cluster group call session bearer is established, including: calling authorization and calling/called ringing indication, which are implemented in the mode of NAS direction transmission; by far, the cluster group call session is established.

Specifically, the calling UE initiates a call, executes step A1 to step A3, and establishes an RRC connection of the cluster group call session between the calling UE and the first eNB; the first eNB executes step A4 according to the RRC connection request message sent by the calling UE, sends the initial UE message of the cluster group call session to the EPC; then, the EPC executes step A5 according to the received initial UE message of the cluster group call session, and sends the initial context establishment request message of the cluster group call session to the first eNB.

After step A5 is executed, the EPC starts to establish the downlink radio bearer of the group call session between the called UE and the EPC through the second eNB, executes step B1 to step B7, sends the group paging message of the cluster group call session to the second eNB, and receives the returned group paging response message of the cluster group call session; and the EPC sends the group context establishment request message of the cluster group call session to the second eNB; then, the second eNB establishes the group downlink broadcast channel of the cluster group call session and sends the configuration message of the group downlink broadcast channel of the cluster group call session to the called UE; at the same time, step A6 to step A12 is executed between the calling UE and the EPC; the EPC acquires the UE capability information of the cluster group call session, establishes the safe mode of the cluster group call session between the calling UE and the first eNB and the RRC reconfiguration of the cluster group call session; thus, the uplink and downlink radio bearers of the cluster group call session between the calling UE and the EPC and the downlink radio bearer between the called UE and the EPC are established.

When the EPC receives the initial UE context establishment response message of the cluster group call session sent by the first eNB and the group context establishment response message of the cluster group call session sent by the second eNB, the application layer part of the cluster group call session has been established.

Step A14 to step A19 establishes bearer activation and authorization between the calling UE and the EPC; after the EPC receives the UE uplink NAS information of the cluster group call session used for authorization response forwarded by the first eNB, the EPC executes step A20 to step B9, sends the UE downlink NAS information of the cluster group call session used for ringing to the first eNB and sends the group downlink NAS information of the cluster group call session used for ringing to the second eNB respectively; then, the first eNB forwards the UE downlink NAS information of the cluster group call session used for ringing to the calling UE and the second eNB forwards the group downlink NAS information of the cluster group call session used for ringing to the called UE; by far, all processes of the cluster group call session are completed.

The above are only the preferred embodiments of the disclosure and are not intended to limit the scope of protection of the disclosure. Any modification, equivalent substitute and improvement made within the spirit and principle of the disclosure shall fall within the scope of protection of the disclosure.

## Claims

1. A method for realizing a cluster group call session in a Long Term Evolution (LTE) system, comprising:
establishing, by an Evolved Packet Core (EPC), uplink and downlink radio bearers of the cluster group call session between a calling User Equipment (UE) and the EPC through a first evolved Node B (eNB) where the calling UE is located; and
establishing, by the EPC, a downlink radio bearer of the cluster group call session between a called UE and the EPC through a second eNB where the called UE is located.

2. The method according to claim 1, wherein the establishing, by an EPC, uplink and downlink radio bearers of the cluster group call session between a calling UE and the EPC through a first eNB where the calling UE is located comprises:
establishing a Radio Resource Control (RRC) connection of the cluster group call session between the calling UE and the first eNB where the calling UE is located;
establishing an initial UE context of the cluster group call session between the EPC and the first eNB where the calling UE is located.

3. The method according to claim 2, wherein the establishing an initial UE context of the cluster group call session between the EPC and the first eNB where the calling UE is located comprises:
receiving, by the EPC, an initial UE message of the cluster group call session sent by the first eNB; and sending, by the EPC, an initial UE context establishment request message of the cluster group call session to the first eNB according to the initial UE message of the cluster group call session;
after receiving the initial UE context establishment request message of the cluster group call session, establishing, by the first eNB, a safe mode of the cluster group call session between the first eNB and the calling UE and an RRC reconfiguration of the cluster group call session in the safe mode; and then returning, by the first eNB, an initial UE context establishment response message of the cluster group call session to the EPC.

4. The method according to claim 1, wherein the establishing, by the EPC, a downlink radio bearer of the cluster group call session between a called UE and the EPC through a second eNB where the called UE is located comprises:
establishing a group context of the cluster group call session between the EPC and the second eNB where the called UE is located;
establishing a downlink broadcast channel between the second eNB and the called UE.

5. The method according to claim 4, further comprising: before establishing a group context of the cluster group call session between the EPC and the second eNB where the called UE is located,
sending, by the EPC, a group paging message of the cluster group call session to the second eNB where the called UE is located, according to the initial UE message of the cluster group call session;
after receiving the group paging message of the cluster group call session, sending, by the second eNB, the group paging message of the cluster group call session to the called UE under coverage of the second eNB; and then receiving and forwarding, by the second eNB, a group paging response message of the cluster group call session returned by the called UE to the EPC.

6. The method according to claim 4 or 5, wherein the establishing a group context of the cluster group call session between the EPC and the second eNB where the called UE is located comprises:
sending, by the EPC, a group context establishment request message of the cluster group call session to the second eNB;
establishing, by the second eNB, a group downlink broadcast channel of the cluster group call session according to the group context establishment request message; sending, by the second eNB, a configuration message of the group downlink broadcast channel of the cluster group call session to the called UE;
sending, by the second eNB, a group context establishment response message of the cluster group call session to the EPC.

7. An Evolved Packet Core (EPC), wherein the EPC is configured to establish uplink and downlink radio bearers of a cluster group call session between a calling User Equipment (UE) and the EPC through a first evolved Node B (eNB), and to establish a downlink radio bearer of the cluster group call session between a called UE and the EPC through a second eNB.

8. The EPC according to claim 7, wherein the EPC is configured to establish an initial UE context of the cluster group call session between the EPC and the first eNB.

9. The EPC according to claim 8, wherein the EPC is further configured to receive an initial UE message of the cluster group call session sent by the first eNB, and to send an initial UE context establishment request message of the cluster group call session to the first eNB according to the initial UE message of the cluster group call session.

10. The EPC according to claim 7, wherein the EPC is further configured to establish a group context of the cluster group call session between the EPC and the second eNB.

11. The EPC according to claim 10, wherein the EPC is further configured to send a group paging message of the cluster group call session to the second eNB according to the initial UE message of the cluster group call session sent by the first eNB.

12. The EPC according to claim 10 or 11, wherein the EPC is further configured to send a group context establishment request message of the cluster group call session to the second eNB.

13. An evolved Node B (eNB), which is an eNB where a called User Equipment (UE) is located and is configured to establish a downlink radio bearer of a cluster group call session between a called UE and an Evolved Packet Core (EPC).

14. The eNB according to claim 13, wherein the eNB is configured to establish a downlink broadcast channel between the eNB and the called UE.

15. The eNB according to claim 14, wherein the eNB is further configured to send a group paging message of the cluster group call session to the called UE under coverage of the eNB after receiving the group paging message of the cluster group call session sent by the EPC, and to return a group paging response message of the cluster group call session to the EPC after receiving the group paging response message of the cluster group call session returned by the called UE.

16. The eNB according to claim 14, wherein the eNB is further configured to establish a group downlink broadcast channel of the cluster group call session according to a group context establishment request message sent by the EPC, to send a configuration message of the group downlink broadcast channel of the cluster group call session to the called UE, and to send a group context establishment response message of the cluster group call session to the EPC.

17. A system for realizing a cluster group call session in a Long Term Evolution (LTE) system, comprising: an Evolved Packet Core (EPC), a first evolved Node B (eNB) and a second eNB, wherein the first eNB is an eNB where a calling User Equipment (UE) is located, and the second eNB is an eNB where a called UE is located, wherein,
the EPC is one described in any one of claims 7 to 12, and the second eNB is one described in any one of claims 13 to 16.

18. The system according to claim 17, wherein
the first eNB is configured to send an initial UE message of the cluster group call session to the EPC, to establish a safe mode of the cluster group call session between the first eNB and the calling UE and an RRC reconfiguration of the cluster group call session in the safe mode after receiving the initial UE context establishment request message of the cluster group call session, and to return an initial UE context establishment response message of the cluster group call session to the EPC.

19. The system according to claim 17, further comprising: a calling UE and a called UE, wherein
the calling UE is configured to establish a Radio Resource Control (RRC) connection of the cluster group call session between the calling UE and the first eNB;
the called UE is configured to return a group paging response message of the cluster group call session to the second eNB after receiving the group paging message of the cluster group call session.
